(19) **Europäisches Patentamt / European Patent Office / Office européen des brevets**

(11) **EP 2 674 684 B1**

(12) **EUROPÄISCHE PATENTSCHRIFT**

(45) Veröffentlichungstag und Bekanntmachung des Hinweises auf die Patenterteilung:
**30.09.2020  Patentblatt 2020/40**

(51) Int Cl.:
*F24D 19/10* (2006.01)          *F24D 3/12* (2006.01)
*F24D 11/02* (2006.01)          *G05D 23/00* (2006.01)

(21) Anmeldenummer: **13167611.6**

(22) Anmeldetag: **14.05.2013**

(54) **Hocheffizientes Heizsystem mit Luft-Wasser-Wärmepumpe**

Highly efficient heating system using air-water-heat pump

Système de chauffage haute efficacité doté d'une pompe à chaleur air-eau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2012  CH 8282012**

(43) Veröffentlichungstag der Anmeldung:
**18.12.2013  Patentblatt 2013/51**

(73) Patentinhaber: **Grüning, Horst**
**5430 Wettingen (CH)**

(72) Erfinder: **Grüning, Horst**
**5430 Wettingen (CH)**

(56) Entgegenhaltungen:
**DE-A1-102005 060 458     US-A- 5 052 472**

**Beschreibung**

*Stand der Technik*

Die Erfindung bezieht sich auf Heizsystem für Gebäude mit einem Wärmeerzeugungssystem mit mindestens einer Wärmepumpe, einem vorwiegend Wasser basierten Wärmetransportsystem, einem Wärmeabgabesystem mit mindestens einem Flächen-Wärmeabgabemodul und einem Steuersystem.

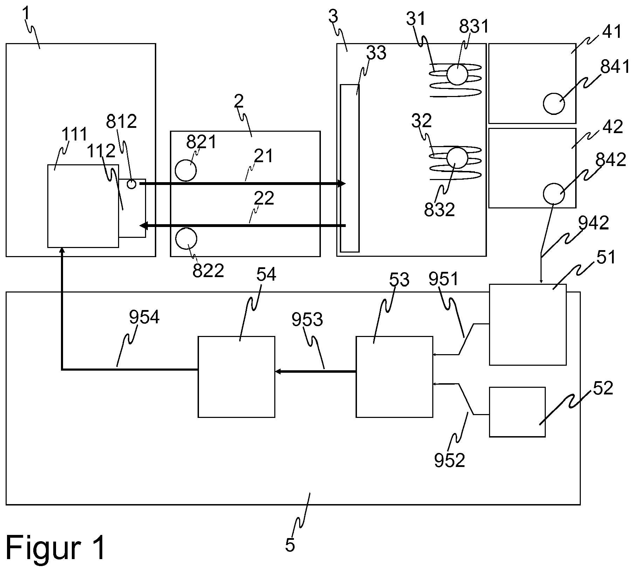

Heizsysteme dieser Art sind allgemein bekannt. Sie sind z.B. in der Publikationsschrift "Handbuch Wärmepumpen: Planung, Optimierung, Betrieb, Wartung" - Herausgeber: Bundesamt für Energie, Bern, Januar 2008. www.bfe.admin.ch. beschrieben. Ihr Systemdesign (Abbildung 1.1 daselbst) folgt weitgehend dem Systemdesign von herkömmlichen öl- oder gasbefeuerten Heizsystemen an.

Die jahreszeitlichen Schwankungen der Umgebungstemperatur des Gebäudes erfordern vom Wärmeabgabesystem die Wärmeabgabe in einem weiten Leistungsbereich. Wie in Öl- und Gasheizsystemen übernimmt auch in den Heizsystemen mit einer Wärmepumpe eine Zweipunktregelung die Steuerung der erzeugten Wärmeleistung. Stabile Regeleigenschaften werden erreicht, indem sowohl der obere als auch der untere Zweipunktwert der Temperatur im Wärmetransportsystem deutlich höher als die vom Wärmeabgabesystem benötigte Temperatur gewählt werden. Die Temperatur des den Wärmeabgabesystemen zugeführten Wassers wird sodann mittels herkömmlicher Mischer eingestellt.

Im Gegensatz zu diesen Öl- oder Gasheizsystemen hängt der Wirkungsgrad einer Wärmepumpe stark von der zu liefernden Vorlauftemperatur ab. Wird die Wärmepumpe entsprechend den bekannten Ausführungen direkt an die Stelle eines Öl- oder Gasheizers gesetzt, so entsteht daraus eine komplexe Situation. Entsprechend sind in der Literatur verschiedene Lösungsansatze und Vorgehensweisen zur Optimierung der entsprechenden Systeme beschrieben. Einige der dabei zu bewältigenden nachteiligen Wirkungsmechanismen können wie folgt verstanden werden: Wird auf der Bereitstellung einer höheren Vorlauftemperatur bestanden, so kann wie bei Öl- und Gasheizsystemen eine stabile Regelung der Temperaturen erreicht werden. Das aber muss mit deutlichen Einbussen der Wärmepumpeneffizienz erkauft werden.

Wird in bekannten Systemen die Vorlauftemperatur reduziert, um die Effizienz der Wärmepumpe zu erhöhen, so reduziert sich auch der Abstand zwischen dem Ein- und Abschaltpunkt des Zweipunktreglers. Damit aber nimmt die Schalthäufigkeit zu, was einerseits zu einer höheren Belastung der Wärmepumpe durch die häufigen Starts und Stopps und andererseits zu einer durch die unstete Betriebsweise verursachten Reduktion der Effizienz der Wärmepumpe führt.

Versucht man, die Vorlauftemperatur wie in bekannten Öl- oder Gasheizsystemen mit Hilfe einer Heizkurve zu optimieren, so laufen die Zweipunkt-Schaltwerte in Zeiten niedrigen Heizbedarfs z.B. im Herbst und Frühling derart dicht zusammen, dass das Anfahren der Wärmepumpe die Vorlauftemperatur bereits auf Grund des Wärmewiderstandes im Wärmeverteilsystem schnell über den Ausschaltwert hinaus bringt. Die Folge ist unkontrollierbar häufiges Schalten, wie es in der einschlägigen Literatur unter dem Begriff "Takten" beschrieben wird.

Es wurde auch bereits ganz auf den Einbau von Mischern verzichtet, so dass die Flächenheizelemente, z.B. Fussbodenheizungen, direkt an die Wärmeverteilung angeschlossen sind. Aber auch dann ergeben sich erhebliche Schwierigkeiten aus der Tatsache, dass zwischen der Wärmepumpe und der Gebäudeumgebung de facto drei Wärmewiderstande in Serie geschaltet sind: Der Wärmewiderstand des Wärmeverteilsystems, der Wärmewiderstand von Flächenheizung und Raumluft und der Wärmewiderstand der Gebäudehülle. In einem hoch isolierten Gebäude erhält die Gebäudehülle einen hohen Wärmewiderstand. Der Wärmewiderstand der Flächenheizung wird klein gewählt, damit eine möglichst niedrige Vorlauftemperatur erreicht werden kann. Der Wärmewiderstand des Wärmeverteilsystems ist durch den Wasserfluss gegeben - er gerät mindestens in die gleiche Grösse wie der Wärmewiderstand der Flächenheizung. Da Flächenheizung und Raumluft grosse Wärmekapazitäten beinhalten, wird es unter diesen Bedingungen sehr schwierig, mittels Zweipunkt-Vorlauftemperaturregelung die Raumtemperatur auf konstante Werte zu regeln.

Eine Linderung der Problematik versprechen Inverterwärmepumpen, weil ihre Kompressorleistung über einen entsprechenden Eingang in gewissen Grenzen gesteuert werden kann. Gerade aber in Zeiten geringen Wärmebedarfs, in denen durch das Takten eine besonders schwierige Regelsituation entsteht, liefern auch Inverterwärmepumpen, die ihre Wärme aus der Aussenluft beziehen (Luft-Wasser-Systeme), aufgrund des bei gemässigten Aussentemperaturen hohen Carnot'schen Wirkungsgrades eine derart hohe Wärmeleistung, dass die Linderung der Problematik nur sehr begrenzt zu spüren ist.

Zur Verbesserung des Wirkungsgrades von Energieumwandlungsanlagen schlägt die Offenlegungsschrift DE 10 2005 060458 A1 eine Anordnung und ein Verfahren zur Leistungsanpassung bei vorgegebener Solltemperatur vor. Die Anordnung beinhaltet ein Wärmeerzeugungssystem mit einer Wärmepumpe, ein Wasser basiertes Wärmetransportsystem und ein Wärmeabgabesystem. Die Energieumwandlungsanlage umfasst ein Wirkungsgrad-Informationssystem zur Ermittlung des Wirkungsgrades, ein Leistungsanpassungssystem zur Betriebsführung der Energieanlagen mit einem optimalen Wirkungsgrad und ein externes Informationssystem zur Fehlerbehandlung. Ein solches System ist sehr komplex und entsprechend fehleranfällig. Es vermag zwar selbsttätig den Wirkungsgrad während der Betriebszeit der Anlage zu optimieren, überlässt aber die Taktung den Steuerverfahren nach dem Stand der Technik und vermag somit die durch übermässige Taktung entstehenden Verluste nicht zu reduzieren.

### Zusammenfassung der Erfindung

Aufgabe der vorliegenden Erfindung ist es deshalb, das Heizsystem der vorgenannten Art derart auszubilden, dass die aufgeführten Nachteile vermieden werden. Diese Aufgabe wird durch die in Anspruch 1 genannten Merkmale gelöst. Vorteilhafte Weiterbildungen ergeben sich aus den abhängigen Patentansprüchen 2 - 7. Ein Heizsystem gemäss der vorliegenden Erfindung regelt die Raumtemperatur kontinuierlich und präzise. Es schaltet den Wärmeerzeuger in wohl definierten Zyklen und realisiert stabil und ohne aufwändige Einstellungen jede erforderliche Abgabeleistung von den kleinsten Werten bis zur vollen Leistung des Wärmeerzeugersystems. Es vermag zudem schnellen Änderungen der Stellgrössen zu folgen, weil es die dazu notwendigen grossen Schwankungen der Vorlauftemperatur zulassen kann.

### Kurze Beschreibung der Zeichnungen

Die Erfindung wird anhand bevorzugter Ausführungsbeispiele, welche in den Zeichnungen dargestellt sind, näher beschrieben. Es zeigt:

Fig. 1: das Blockdiagramm eines Heizsystems für ein Gebäude,
Fig. 2: den zeitlichen Verlauf von ausgewählten Signalen im Heizsystem,
Fig. 3: die Steuerkennlinie eines Taktgenerators, zwei Beispiele des Ausgangssignals sowie die resultierende Leistungsabgabe der Wärmepumpe,
Fig. 4: den Heizregelkreis in dem Heizsystem für ein Gebäude nach Fig. 1,
Fig. 5: den zeitlichen Verlauf ausgewählter Signale im Gleichgewichtszustand des Heizregelkreises,
Fig. 6: die zeitliche Veränderung der Signale im Heizregelkreis als Folge einer plötzlichen Erhöhung des Temperatursollwertes,
Fig. 7: das Blockdiagramm eines zweiten Heizsystems für ein Gebäude,
Fig. 8: Ausgangsgrössen eines Taktgenerators und eines Regelverstärkers als Funktion des Abweichungskorrektursignals,
Fig. 9: das Blockdiagramm eines dritten Heizsystems für ein Gebäude,
Fig. 10: den Heizleistungsbedarf eines Gebäudes als Funktion der Aussentemperatur,
Fig. 11: den zeitlichen Verlauf von ausgewählten Signalen eines dritten Heizsystems während eines typischen morgendlichen Temperaturanstieges,
Fig. 12: den zeitlichen Verlauf von ausgewählten Signalen in einem fünften Heizsystem für ein Gebäude,
Fig. 13: das Blockdiagramm eines sechsten Heizsystems für ein Gebäude,
Fig. 14: den zeitlichen Verlauf von ausgewählten Signalen in einem sechsten Heizsystem für ein Gebäude.

### Detaillierte Beschreibung der Erfindung

### Erste bevorzugte Ausführung

Fig. 1 zeigt ein Heizsystem für ein Gebäude entsprechend einer ersten bevorzugten Ausführung. Es umfasst einen Wärmeerzeuger 1 mit mindestens einer Wärmepumpe 111, ein vorwiegend Wasser basiertes Wärmetransportsystem 2, ein Wärmeabgabesystem 3 mit den Flächen-Wärmeabgabemodulen 31, 32 und Verteiler 33 sowie ein Steuersystem 5. Die Wärmepumpe vorsorgt die Räume 41 und 42 in bekannter Weise mit Wärme. Ebenso kann sie in bekannter Weise zum Kühlen der Räume eingesetzt werden.

Die Flächen-Wärmeabgabemodule sind den Räumen 41 und 42 zugeordnet. In diesem Beispiel wird angenommen, dass das zu beheizende Gebäude 2 Räume umfasst. Diese zwei Räume stehen vereinfachend für die Räume einer typischen Wohnung oder eines ein- oder mehrgeschossigen Gebäudes. Sie werden nicht als Teile des Heizsystems verstanden.

Ein Temperatursensor 842 erfasst die Temperatur der Luft in Raum 42 und meldet sie an das Innenraumtemperaturerfassungssystem 51. Sind die Räume 41 und 42 Teil eines hochgradig isolierten Hauses mit einem Heizbedarf von z.B. 40kWh/(m2 x Jahr), so gibt der Wert des Temperatursensors 842 in guter Näherung auch die Temperatur in Raum 41 wieder. Ein Einbezug der Werte des Sensors 841 ist in solch einem Falle nicht erforderlich.

Andererseits kann der Temperatursensor 842 je nach Situation aber auch in einem der wärmsten Räume wie z.B. einem Bad angeordnet sein. Er erfasst dann den höchsten vom Heizsystem zu erbringenden Wert, und der Zufluss zu anderen Räumen kann dagegen gedrosselt werden.

Aufgrund der thermischen Trägheit des Flächen-Wärmeabgabemoduls 32 erhöht sich der Messwert des Oberflächentemperatursensors 832 nur langsam, wenn die Wärmepumpe 111 Wärme zuführt. Das Innenraumtemperaturerfassungssystem 51 wird deshalb bereits ein weitgehend geglättetes Temperatursignal empfangen, so dass es in diesem Falle nur eine geringfügige Nachglättung zur Ausglättung plötzlich auftretender Fremdeinflüsse, wie z.B. beim Betreten des Raumes 42, durchführen muss.

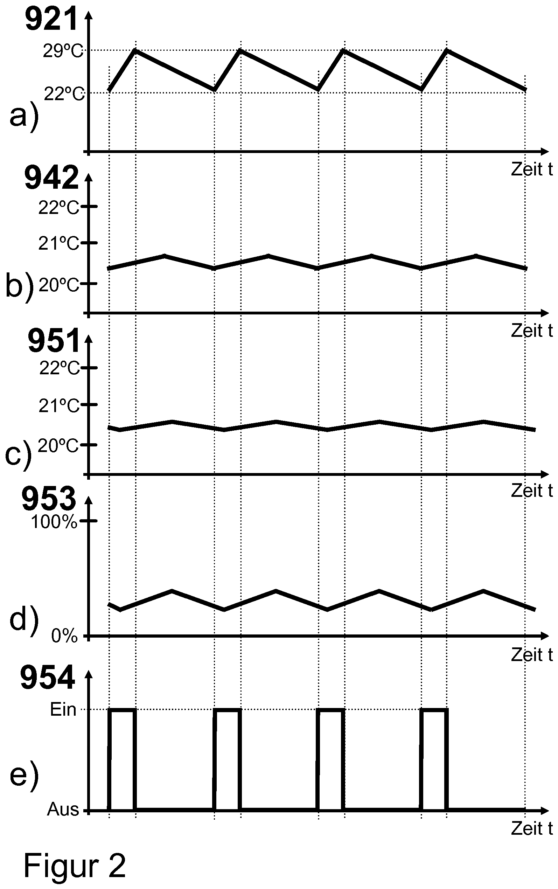

In Fig. 2a ist entsprechend beispielhaft der zeitliche Verlauf des Wertes 921 des Temperatursensors 821 im Vorlauf des Wärmetransportsystems 21 gezeigt, Fig. 2b zeigt das Signal 942 des Temperatursensors 842 und Fig. 2c den vom Innenraumtemperaturerfassungssystem 51 erzeugten Temperaturglättungswert 951.

Gemäss Fig. 1 werden der Temperaturglättungswert 951 und der vom Solltemperatursystem 52 bereitgestellte Temperatursollwert 952 dem Proportional-Integral-Differential-Regelblock (PID-Regelblock) 53 zugeführt. Der PID-Regelblock 53 erzeugt daraus in bekannter Weise das Abweichungskorrektursignal 953. Der zeitliche Verlauf des Abweichungskorrektursignals 953 ist in Fig. 2d dargestellt.

Das Abweichungskorrektursignal 953 wird sodann dem Taktgenerator 54 zugeführt. Basierend darauf erzeugt der Taktgenerator 54 ein Ein-Aus-Signal 954 (Fig. 2e) zur Steuerung des Betriebszustandes der Wärmepumpe 111.

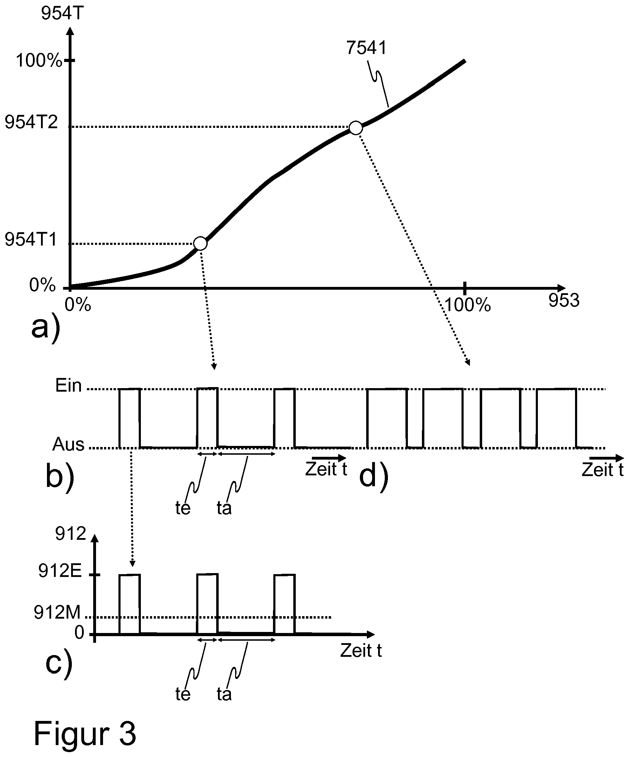

Fig. 3 beschreibt die Wirkungsweise des Taktgenerators 54. Fig. 3a zeigt die Abhängigkeit des Tastverhältnisses 954T vom Abweichungskorrektursignal 953. Das Tastverhältnis 954T ist eine charakteristische Grösse zur Beschreibung des Ein-Aus-Signals. Es bestimmt sich aus der Einschaltdauer te und der Ausschaltdauer ta (siehe Fig. 3b) des Ein-Aus-Signals zu

$$\text{Tastverhältnis } 954T1 = te \, / \, (te + ta).$$

Das Tastverhältnis 954T ist mit dem Abweichungskorrektursignal 953 durch die monoton steigende Funktion 7541 verknüpft.

Fig. 3c zeigt die von der Wärmepumpe 111 abgegebene Leistung 912, wie sie der Sensor 812 registriert. Ist die Wärmepumpe 111 eingeschaltet, so erzeugt sie die Einschaltleistung 912E; ist sie abgeschaltet, so erzeugt sie die Leistung 0. Die mittlere abgegebene Leistung 912M bestimmt sich dann zu

$$\text{mittlere abgegebene Leistung } 912M = \text{Tastverhältnis } 954T \text{ x Leistung } 912E.$$

Fig. 3d zeigt das Ein-Aus-Signal 954 bei einem Tastverhältnis 954T2: Der Anteil der Ein-Dauer an der Gesamtperiodenzeit (te + ta) hat im Vergleich zu Fig. 3b zugenommen. In dem gezeigten Beispiel hat sich die Gesamtperiodenzeit (te + ta) beim Einstellen des Tastverhältnisses 954T2 gegenüber dem Wert beim Einstellen des Tastverhältnisses 954T1 ohne Einfluss auf die mittlere abgegebene Leistung 912M reduziert.

Die monoton steigende Funktion 7541 ist in diesem Beispiel eine deutlich nichtlineare Funktion. Jede monotone Funktion kann an dieser Stelle eingesetzt werden; insbesondere auch eine durch eine Gerade repräsentierte lineare Funktion. Ebenso kann eine monoton fallende Funktion eingesetzt werden, wenn dem durch Vorzeichenänderung z.B. im PID-Regelblock 53 Rechnung getragen wird.

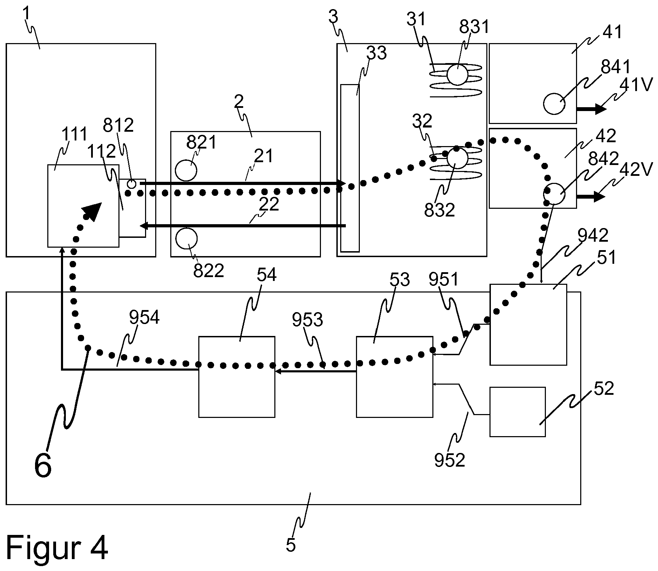

Fig. 4 zeigt den Heizregelkreis 6. Er entsteht durch Zusammenwirken von Wärmepumpe 111 mit Wärmetauscher 112, Wärmetransportsystem 2, Verteiler im Wärmeabgabesystem 33 sowie Flächen-Wärmeabgabemodul 32, Raum 42, Temperatursensor 842, Innenraumtemperaturerfassungssystem 51, PID-Regelblock 53 und Taktgenerator 54. Weiter eingezeichnet sind die Wärmeverluste 41V und 42V der Räume 41 und 42.

Ziel des Heizregelkreises 6 ist das Einstellen und Halten der Raumtemperatur auf dem durch das Solltemperatursystem 52 vorgegebenen Wert. Der Heizregelkreis 6 erreicht das dadurch, dass er die Wärmepumpe 111 so ansteuert, dass sie im Mittel genau so viel Wärme abgibt, wie zur Erhaltung der Temperatur im Raum 42 benötigt wird. Die mittlere abgegebene Leistung 912M muss also gleich der Summe aus den Wärmeverlusten 41V und 42V werden.

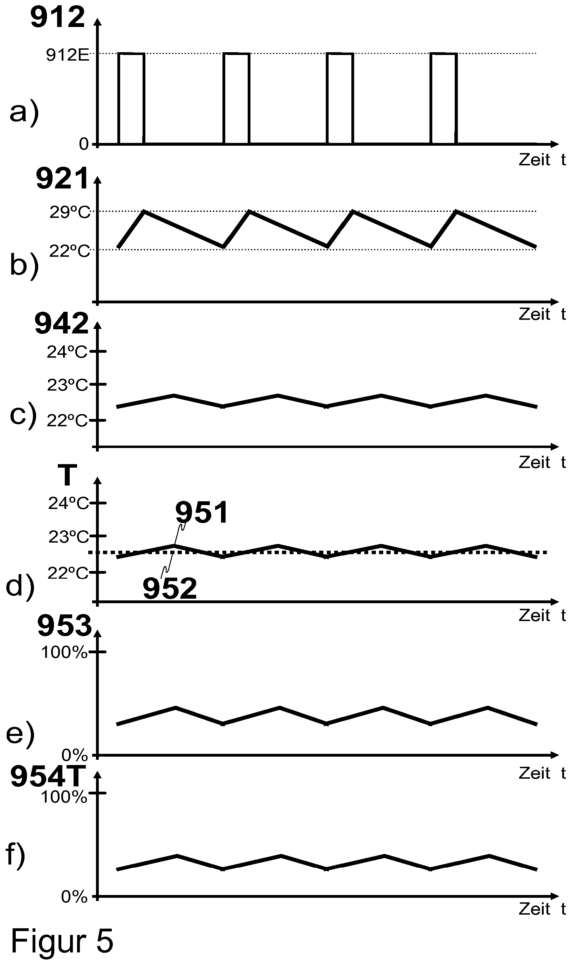

Das System ist dann im Gleichgewicht. Die Steuergrössen im Heizregelkreis 6 sind infolgedessen dann über der Zeit konstant. Fig. 5 zeigt den zeitlichen Verlauf ausgewählter Signale im Gleichgewichtszustand: die von der Wärmepumpe 111 abgegebene Leistung 912 (Fig. 5a), den Wert 921 des Temperatursensors im Vorlauf des Wärmetransportsystems (Fig. 5b), den Temperaturwert des Temperatursensors 942 (Fig. 5c), den Temperaturglättungswert 951 und den Temperatursollwert 952 (Fig. 5d), das Abweichungskorrektursignal 953 (Fig. 5e) sowie das Tastverhältnis 954T (Fig. 5f).

Eine Auslenkung aus dem Gleichgewichtszustand kann durch verschiedene Einflüsse auf das Heizsystem verursacht werden. Viele dieser Einflüsse wirken in der Regel langsam: Eine Änderung der Temperatur der Umgebungsluft des Hauses oder ein zusätzlicher Wärmeeintrag in den Raum 42 durch Einschalten üblicher Geräte wie z.B. eines Personell Computers oder Lampen. Solchen Änderungen wird der Heizregelkreis 6 ohne grosse Ausschläge in den Steuergrössen folgen.

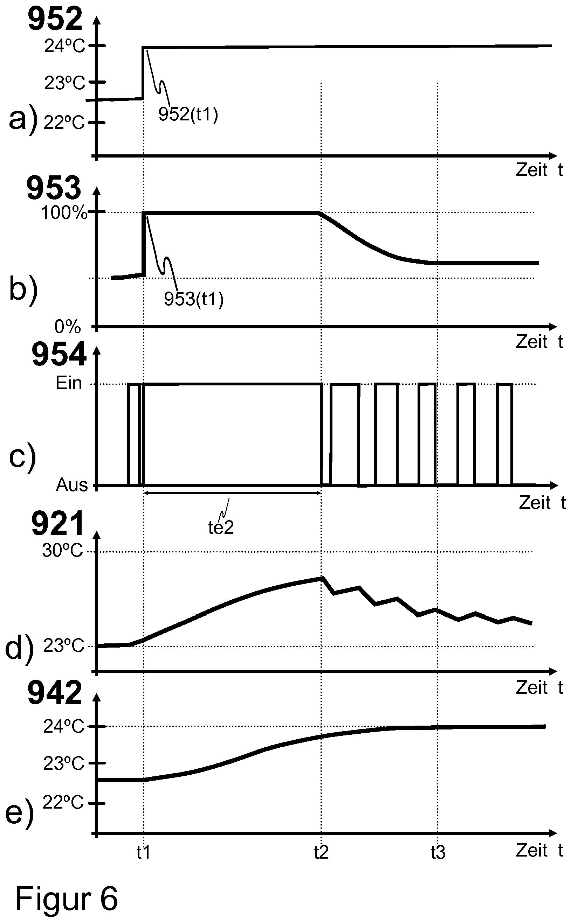

Für die Erklärung der Wirkungsweise des Heizregelkreises 6 wird deshalb eine weit stärkere Änderung herangezogen: Das plötzliche Verstellen des Temperatursollwertes 952. Dadurch wird der Heizregelkreis 6 deutlich aus seinem Gleichgewichtszustand gebracht. Die Wirkung einer solchen Änderung ist in Fig. 6 gezeigt.

Fig. 6 a zeigt den Temperatursollwert 952 als Funktion der Zeit. Im Zeitpunkt t1 wird der Sollwert erhöht.

Der PID-Regelblock 53 erkennt den Unterschied zwischen dem neuen Temperatursollwert 952(t1) und dem bestehenden Temperaturglättungswert. Entsprechend erzeugt es ein erhöhtes Abweichungskorrektursignal 953(tl) (Fig. 6b).

Der Taktgenerator 54 erhält zum Zeitpunkt t1 somit ein erhöhtes Eingangssignal 953(t1). In der Folge erhöht er das Tastverhältnis 954T auf den Wert 100%. Das Ein-Aus-Signal 954 geht somit dauerhaft auf den Wert "Ein" (Fig. 6c), solange der Wert 954T des Tastverhältnisses bei 100% verharrt.

Ab dem Zeitpunkt t1 wird die Wärmepumpe 111 somit für die Zeitdauer te2 eingeschaltet. Fig. 6d zeigt die Wirkung auf den Wert des Temperatursensors 921 im Vorlauf des Wärmetransportsystems 2.

Damit erhält das Flächen-Wärmeabgabemodul 32 mehr Wärme. Seine Oberflächentemperatur 832 steigt langsam an. Ebenso steigt die Temperatur im Raum 42, und mit ihr der Temperaturwert des Temperatursensors 942 (Fig. 6e), und so auch der Temperaturglättungswert 951.

Die Erhöhung des Temperaturglättungswertes 951 bewirkt eine Verringerung des Unterschiedes zum Temperatursollwert 952(t1). Der Differenzialzweig des PID-Regelblockes 53 erkennt zudem die Änderung des Temperaturglättungswertes 951 mit der Zeit und addiert einen der Steigung entsprechenden Wert zum Temperaturglättungswert 951 im PID-Regelblock 53. In der Folge wird das Abweichungskorrektursignal 953 bereits zum Zeitpunkt t2, also deutlich bevor der Temperaturglättungswert 951 den Temperatursollwert 952(t1) erreicht, reduziert. Auf diese Weise kann ein sanftes Einlaufen des Temperaturglättungswertes 951 in den Temperatursollwert 952(t1) erzielt werden. Zum Zeitpunkt t3 wird der neue Gleichgewichtszustand praktisch erreicht.

Ein Heizsystem gemäss einer ersten bevorzugten Ausführung regelt die Temperatur kontinuierlich und präzise. Es schaltet den Wärmeerzeuger in wohl definierten Zyklen und realisiert stabil und ohne aufwändige Einstellungen jede erforderliche Abgabeleistung von den kleinsten Werten bis zur vollen Leistung des Wärmeerzeugersystems. Es vermag zudem schnellen Änderungen der Stellgrössen zu folgen, weil es die dazu notwendigen grossen Schwankungen der Vorlauftemperatur zulassen kann.

*Zweite bevorzugte Ausführung*

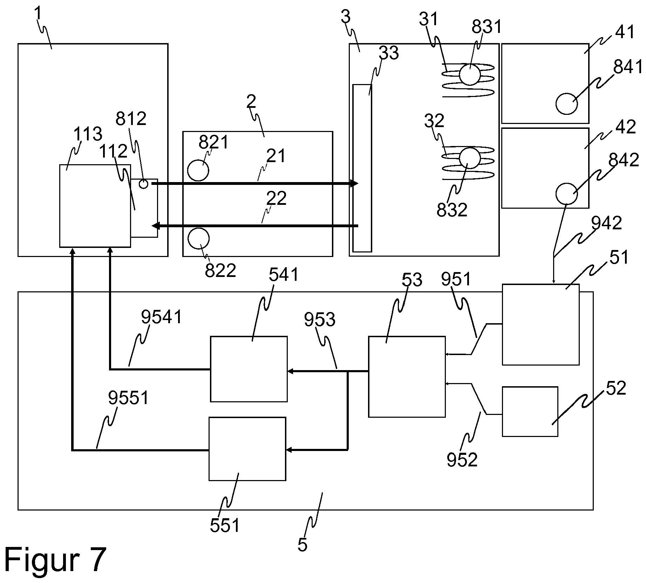

Fig. 7 zeigt das Blockdiagramm eines Heizsystems nach einer zweiten bevorzugten Ausführung der vorliegenden Erfindung. Im Wärmeerzeugungssystem 1 wird eine invertergesteuerte Wärmepumpe 113 und im Steuersystem 5 werden ein Taktgenerator 541 sowie ein Regelverstärker 551 eingesetzt. Alle Komponenten mit unveränderten Bezeichnern arbeiten wie oben beschrieben.

Der Taktgenerator 541 empfängt das Abweichungskorrektursignal 953 und gibt das Ein-Aus-Signal 9541 an die invertergesteuerte Wärmepumpe 113 weiter. Der Regelverstärker 551 empfängt das Abweichungskorrektursignal 953 und gibt das Leistungssteuersignal 9551 an die invertergesteuerte Wärmepumpe 113 weiter.

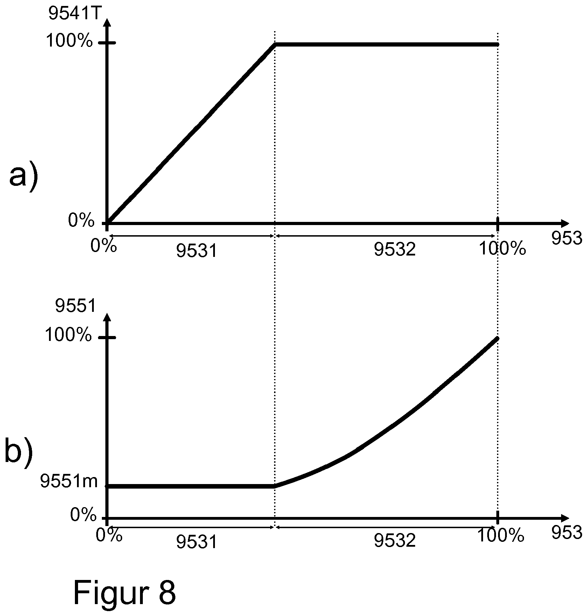

Fig. 8a zeigt die Abhängigkeit des Tastverhältnisses 9541T des Ein-Aus-Signals 9541 vom Abweichungskorrektursignal 953. In dem unteren Bereich 9531 des Abweichungskorrektursignals 953 steigt das Tastverhältnis 9541T monoton, insbesondere linear, mit zunehmendem Abweichungskorrektursignal 953 an und erreicht den Maximalwert von 100% an der oberen Grenze dieses Bereiches. In dem oberen Bereich 9532 des Abweichungskorrektursignals 953 verharrt das Tastverhältnis 9541T auf dem Wert von 100%.

Fig. 8b zeigt die Abhängigkeit des Leistungssteuersignals 9551 vom Abweichungskorrektursignal 953. In dem unteren Bereich 9531 des Abweichungskorrektursignals 953 verharrt das Leistungssteuersignal 9551 auf einem Minimalwert 9551m. In dem oberen Bereich 9532 steigt es monoton mit zunehmendem Abweichungskorrektursignal 953 an und erreicht den Maximalwert von 100% an der oberen Grenze des Bereiches 9532.

In dem unteren Bereich 9531 wird somit die Leistung der invertergesteuerten Wärmepumpe 113 im eingeschalteten Betriebszustand 912E durch das Leistungssteuersignal 9551 auf den zum Minimalwert 9551m gehörenden kleinen Wert behalten, während die mittlere abgegebene Leistung 912M daraus durch das Tastverhältnis 9541T festgelegt wird. In dem oberen Bereich 9532 wird die invertergesteuerte Wärmepumpe 113 dauerhaft in den eingeschalteten Betriebszustand 912E gebracht, während die Leistung 912 und damit auch die mittlere abgegebene Leistung 912M durch das Leistungssteuersignal 9551 festgelegt wird.

Ein Heizsystem gemäss einer zweiten bevorzugten Ausführung der vorliegenden Erfindung nutzt die Regeleigenschaften der invertergesteuerten Wärmepumpe. Es bietet einen stetigen Leistungsabgaberegelbereich von 0% bis 100% der Nennleistung der Wärmepumpe, erreicht einen hohem Wirkungsgrad und geringen Verschleiss durch kleine Belastung der Komponenten der Wärmepumpe.

*Dritte bevorzugte Ausführung*

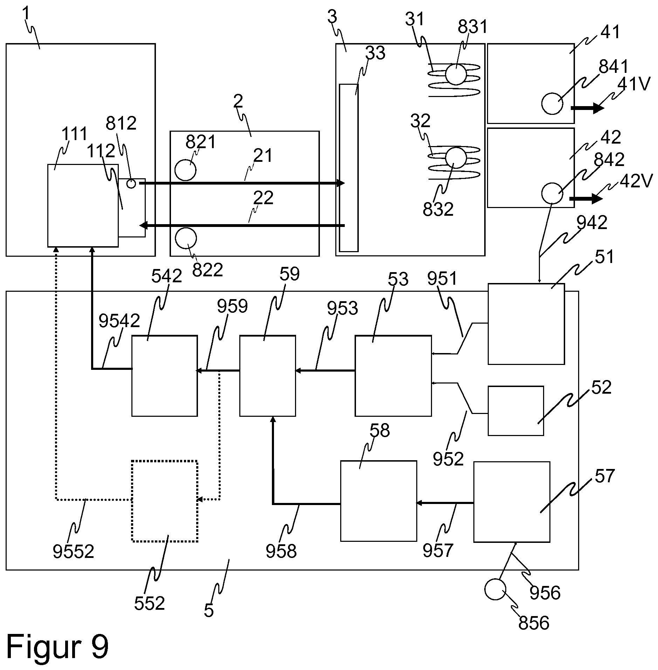

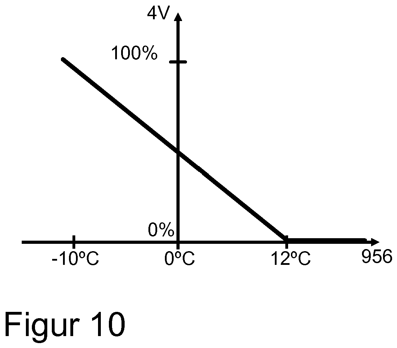

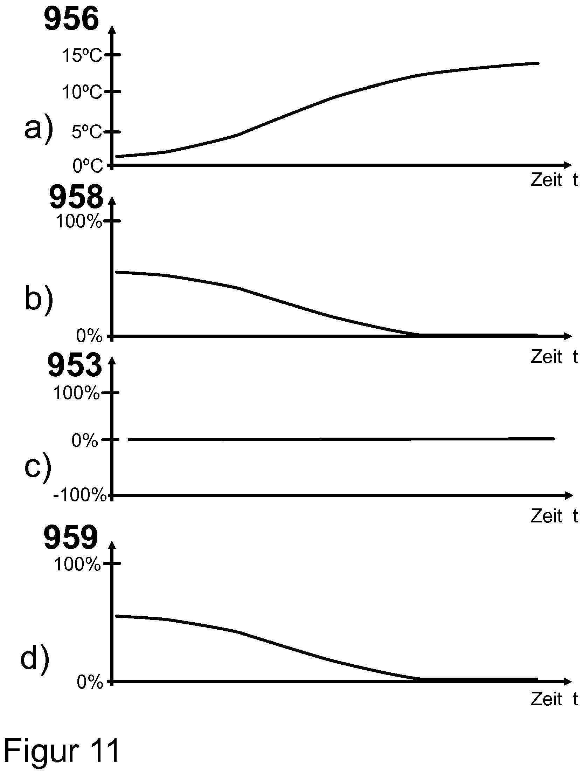

Fig. 9 zeigt das Blockdiagramm eines Heizsystems nach einer dritten bevorzugten Ausführung der vorliegenden Erfindung. Zusätzlich zum Innenraumtemperaturerfassungssystem 51 wird im Steuersystem 5 ein Aussentemperaturerfassungssystem 57, das den Wert eines Aussen- temperatursensors 856 aufnimmt, ein Heizleistungskurvengenerator 58 sowie ein Rechenblock 59 eingesetzt. Gestrichelt eingetragen ist zudem ein Regelverstärker 552 für den Fall, dass eine Inverterwärmepumpe an die Stelle der Wärmepumpe 111 tritt. Die Funktionsweise wird anhand von Fig. 10 und Fig. 11 erläutert.

Fig. 10 zeigt den Heizleistungsbedarf 4V = 41V + 42V des Gebäudes als Funktion der Aussentemperatur 956: mit sinkender Aussentemperatur nimmt der Heizleistungsbedarf nahezu linear zu. Eine entsprechende Funktion kann für jedes Gebäude nach bekannten Gesetzmässigkeiten bestimmt werden.

Fig. 11a zeigt den Verlauf des Signals 956 des Aussentemperatursensors 856 als Funktion der Zeit während eines typischen morgendlichen Temperaturanstieges.

Entsprechend dem beobachteten Temperaturanstieg nimmt der Heizleistungsbedarf 4V des Gebäudes ab. Dies steht insbesondere dann in Übereinstimmung mit der in Fig. 10 wiedergegebenen Funktion, wenn keine fremden Quellen wie z.B. Sonneneinstrahlung einwirken. Der momentane Heizleistungsbedarf wird durch den Heizleistungskurvengenerator 58 ermittelt und als Wert 958 ausgegeben (Fig. 11b).

Ändert sich die Temperatur im Innern des Gebäudes nicht, wie das idealerweise der Fall wäre, so bleibt das Abweichungskorrektursignal 953 konstant (Fig. 11c).

Der Rechenblock 59 nimmt sowohl den Wert 958 des Heizleistungskurvengenerators als auch das Abweichungskorrektursignal 953 auf und bestimmt daraus das Leistungsanforderungssignal 959, das dem Taktgenerator 542 und gegebenenfalls dem Regelverstärker 552 zugeführt wird. Entsprechend dem Verlauf des Heizleistungsbedarfs wird das Leistungsanforderungssignal 959 reduziert (Fig. 11d). Entsprechend wird die mittlere Leistungsabgabe der Wärmepumpe 111 in bereits beschriebener Weise reduziert, ohne dass dazu das Abweichungskorrektursignal 953 geändert werden muss.

Das Beispiel zeigt den Idealfall einer 100%-tigen Kompensation: Der Wert 958 des Heizleistungskurvengenerators bewirkt die gesamte Anpassung der mittleren Leistungsabgabe; das Abweichungskorrektursignal 953 trägt nichts bei. Eine solch ideale Kompensation lässt sich in der Praxis jedoch nur selten erreichen. Zur Erzielung eines wirkungsvollen Beitrages wird deshalb eine Untergrenze des Beitrages bei 70% gesetzt.

Ein Heizsystem gemäss einer dritten bevorzugten Ausführung der vorliegenden Erfindung führt die mittlere Leistungsabgabe der Wärmepumpe 111 entsprechend der momentanen Aussentemperatur nach. Es vermag somit die Temperatur im Innern des Gebäudes ungestört von äusseren Temperaturschwankungen auf dem Sollwert zu halten.

*Vierte bevorzugte Ausführung*

Gemäss einer vierten bevorzugten Ausführung der vorliegenden Erfindung umfasst der Taktgenerator 54 respektive 541 oder 542 des Steuersystems 5 einen Puls-Weiten-Modulator zur Erzeugung des Ein-Aus-Signals.

Ein Puls-Weiten-Modulator ist aus verschiedenen Publikationsschriften bekannt. Es handelt sich dabei um ein besonders leicht zu realisierendes Verfahren zur Erzeugung von Ein-Aus-Schaltsignalen mit veränderbarem Tastverhältnis, wobei die Periodendauer (te + ta) konstant gehalten wird.

Ein Heizsystem gemäss einer vierten bevorzugten Ausführung der vorliegenden Erfindung kann mit besonders geringem Aufwand realisiert werden.

*Fünfte bevorzugte Ausführung*

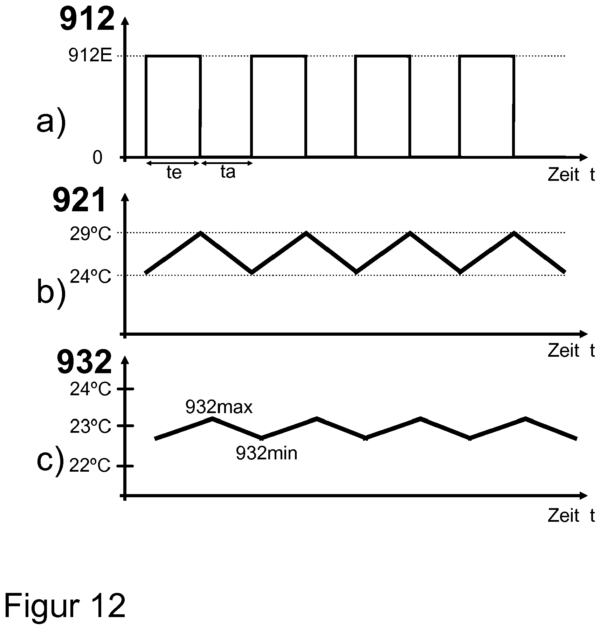

Fig. 12 zeigt Signale gemäss einer fünften bevorzugten Ausführung der vorliegenden Erfindung. Fig. 12a zeigt den zeitlichen Verlauf der Leistung 912 der Wärmepumpe 111 bei 50% Tastverhältnis, also mit te = ta. Fig. 12b zeigt den zeitlichen Verlauf des Wertes 921 des Temperatursensors im Vorlauf des Wärmetransportsystems, und Fig. 12c den Wert 932 des Oberflächentemperatursensors 832. Der Wert 932 des Oberflächentemperatursensors bewegt sich zwischen dem Maximalwert 932max und dem Minimalwert 932min.

Die Temperaturschwankung (932max - 932min) beeinflusst die Effizienz des Betriebs der Wärmepumpe: Eine kleine Temperaturschwankung erfordert häufige Schalthandlungen und reduziert damit die Betriebseffizienz des Systems, eine grosse Temperaturschwankung erhöht entsprechend die Betriebseffizienz.

Zugleich aber beeinflusst die Temperaturschwankung (932max - 932min) auch den Komfort im Raum 42: Eine kleine Temperaturschwankung übt wenig Einfluss auf die Personen aus. Sie bietet somit hohen Komfort. Eine grosse Temperaturschwankung führt zu spürbaren Schwankungen der Strahlungswärme des betreffenden Wärmeabgabemoduls und der Lufttemperatur des Raumes. Sie bedingt somit eine spürbare Komforteinbusse.

Der vorgegebene Wert der Temperaturschwankung (932max - 932min) wird so gewählt, dass er beiden Bedingungen genügt. Unter Berücksichtigung der Trägheiten im Wärmetransportsystem 2 und im Wärmeabgabesystem 3 folgt daraus die Periodendauer (te + ta).

Ein Heizsystem gemäss einer fünften bevorzugten Ausführung der vorliegenden Erfindung kann bei gutem Heizkomfort eine hohe Betriebseffizienz erzielen.

*Sechste bevorzugte Ausführung*

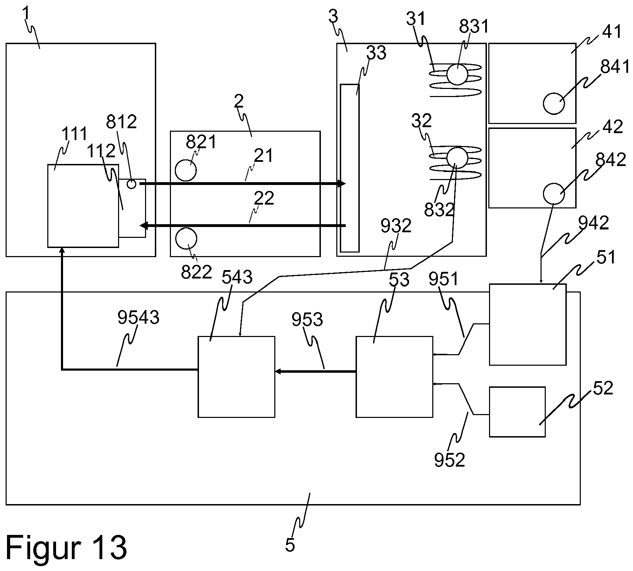

Fig. 13 zeigt das Blockdiagramm eines Heizsystems nach einer sechsten bevorzugten Ausführung der vorliegenden Erfindung.

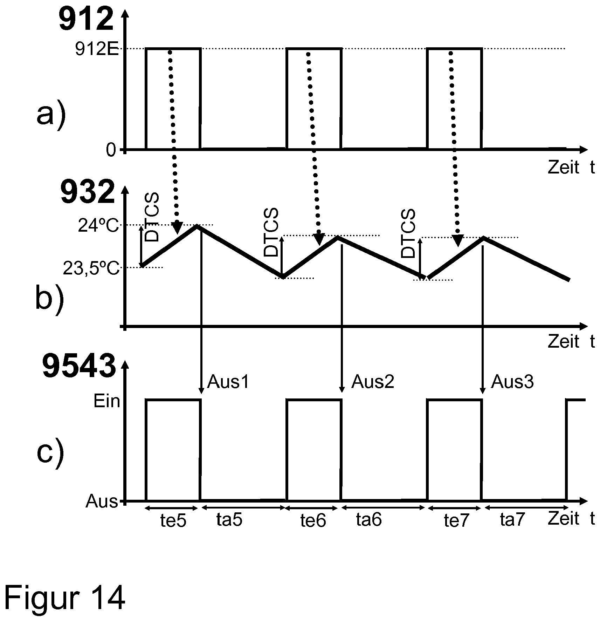

Der Taktgenerator 543 erhält zur Bestimmung des Endes der Einschaltzeit te1 den Wert 932 des Oberflächentemperatursensors 832. Die Wirkungsweise wird anhand der Zeitdiagramme in Fig. 14 dargelegt.

Fig. 14a zeigt den zeitlichen Verlauf des Wertes 912 der von der Wärmepumpe 111 abgegebenen Leistung und Fig. 14b den des Wertes 932 des Oberflächentemperatursensors 832. Wenn die Wärmepumpe eingeschaltet ist, wird dem Wärmetransportsystem 2 über den Vorlauf 21 Wärme zugeführt. Dies führt zu einer Aufladung der Wärmekapazität des Flächen-Wärmeabgabemoduls 32. Entsprechend erhöht sich die Temperatur 932.

Fig. 14c zeigt den zeitlichen Verlauf 9543 des Ein-Aus-Signals. Der Einschaltzustand mit Zeitdauer te5 wird dann beendet, wenn sich die Temperatur 932 um den vordefinierten Wert DTCS erhöht hat. Die zu der Einschaltzeit te5 gehörende Ausschaltzeit ta5 wird danach vom Taktgenerator 543 gemäss der Gleichung 9543T = te5 / (te5 + ta5) ermittelt und eingestellt. Danach wird der Vorgang Puls für Puls fortgesetzt.

Der Wert 932 des Oberflächentemperatursensors 832 stellt eine charakteristische Systemtemperatur dar. Charakteristische Systemtemperaturen in diesem Sinne sind solche Werte, die eng mit einer oder mehreren Raumtemperaturen verknüpft sind, wie z.B. der Wert 931 des Oberflächentemperatursensors 831, der Temperaturwert 941 des Temperatursensors im Raum 41, der Temperaturwert 942 des Temperatursensors im Raum 42 oder der Wert 922 des Temperatursensors im Rücklauf 21 des Wärmetransportsystems 2. Ebenso kann ein aus mehreren solchen Werten erstellter Resultatwert als charakteristische Systemtemperatur eingesetzt werden.

Ein Heizsystem gemäss einer sechsten bevorzugten Ausführung der vorliegenden Erfindung erzielt ohne Justierung eine hohe Betriebseffizienz.

*Siebte bevorzugte Ausführung*

Eine siebte bevorzugte Ausführung der vorliegenden Erfindung umfasst eine Wärmepumpe mit Aussenluftquelle und Mehrstufen-Pumpsystem.

Eine Wärmepumpe mit Aussenluftquelle und Mehrstufen-Pumpsystem ist aus der Patentschrift EP2088390 (A2) bekannt. Wärmepumpen, die ihre Wärme aus der Aussenluft beziehen, zeichnen sich durch besonders einfachen und kostengünstigen Anschluss aus. Das Mehrstufen-Pumpsystem ermöglicht einen besonders grossen Aussentemperatur-Arbeitsbereich, hohe Anpassungsfähigkeit und hohe Effizienz. Aufgrund der komplexen internen Regelvorgänge erfordert eine solche Wärmepumpe jedoch stabile Ansteuerzustände von ausreichender Dauer zwischen 15 Minuten und 1 Stunde. Dies wird in einem Heizsystem gemäss der vorliegenden Erfindung erfüllt.

Ein Heizsystem gemäss einer siebten bevorzugten Ausführung der vorliegenden Erfindung erzielt gute Systemeigenschaften und eine herausragende Systemeffizienz bei geringen Gestehungskosten.

Die vorliegende Erfindung wurde anhand von bevorzugten Ausführungsformen beschrieben. So ist dem Fachmann bekannt, dass die genannten Blöcke in unterschiedlicher Form ausgeführt werden können. Insbesondere die dem Steuersystem 5 zugeordneten Blöcke können als Hardwareschaltung realisiert sein. Ebenso aber kann jede dieser Funktionen auch durch eine Software, die z.B. als Teil einer grösseren Steuerung aufgerufen wird, realisiert werden. Die Zuordnung dieser Funktionsblöcke zur Steuerung 5 wurde aus rein praktischen Gründen gewählt. Jede andersgeartete An- und Zuordnung, die eine entsprechende Funktionalität erzeugt, wird im Sinne der Erfindung als gleichwertig angesehen.

**Patentansprüche**

1. Heizsystem für Gebäude mit einem Wärmeerzeugungssystem (1) mit mindestens einer Wärmepumpe (111), einem vorwiegend Wasser basierten Wärmetransportsystem (2), einem Steuersystem (5) und einem Wärmeabgabesystem (3) mit mindestens einem Flächen-Wärmeabgabemodul (31, 32), wobei

 - das Steuersystem (5) mindestens ein Innenraumtemperaturerfassungssystem (51), ein Solltemperatursystem (52), einen PID-Regelblock (53) und einen Taktgenerator (54) umfasst, worin

- das Innenraumtemperaturerfassungssystem (51) einen Temperaturglättungswert (951) erzeugt, der die Temperatur in Innern des Gebäudes widerspiegelt,
- der PID-Regelblock (53) aus dem Temperaturglättungswert (951) und einem von dem Solltemperatursystem (52) gelieferten Wert ein Abweichungskorrektursignal (953) erzeugt und
- der Taktgenerator (54) aus dem Abweichungskorrektursignal (953) ein Ein-Aus-Signal (954, 9541, 9542, 9543) für die mindestens eine Wärmepumpe (111) erzeugt, dessen Tastverhältnis (954T, 9543T) mit zunehmendem Abweichungskorrektursignalwert (953) monoton steigt.

2. Heizsystem nach Anspruch 1,
**dadurch gekennzeichnet dass**

- die Leistung der Wärmepumpe (113) durch ein Leistungsteuersignal (9551) veränderbar ist und
- das Steuersystem (5) zusätzlich einen Regelverstärker (551) umfasst, wobei

- der Taktgenerator (541, 542, 543) in einem unteren Bereich (9531) des Abweichungskorrektursignals (953) ein Ein-Aus-Signal mit monoton steigendem Tastverhältnis (9541T) und der Regelverstärker (551) ein kleines Leistungsteuersignal (9551m) erzeugt und
- der Taktgenerator (541) in einem oberen Bereich (9532) des Abweichungskorrektursignals (953) ein dauerhaftes Ein-Signal (9541T=100%) und der Regelverstärker (551) ein mit dem Abweichungskorrektursignalwert (953) monoton steigendes Leistungsteuersignal (9551) erzeugt.

3. Heizsystem nach Anspruch 1 oder Anspruch 2,
**dadurch gekennzeichnet dass**

- das Steuersystem (5) ferner

- ein Aussentemperaturerfassungssystem (57) mit mindestens einem Sensor zur Erfassung der Aussentemperatur (856) umfasst,
- einen Heizleistungskurvengenerator (58) umfasst, der zu jeder Aussentemperatur (956) einen Aussentemperatur-Leistungssollwert (958) erzeugt und
- der Aussentemperatur-Leistungssollwert (958) so zum Abweichungskorrektursignal(953) hinzugefügt wird, dass Veränderungen der Aussentemperatur (956) dadurch zu mehr als 70% kompensiert werden.

4. Heizsystem nach einem der Ansprüche 1 - 3,
**dadurch gekennzeichnet dass**

- der Taktgenerator (54, 541, 542) einen Puls-Weiten-Modulator zur Erzeugung des Ein-Aus-Signals (954, 9541, 9542) umfasst.

5. Heizsystem nach Anspruch 4,
**dadurch gekennzeichnet dass**

- das die Periodendauer (te+ta) des Puls-Weiten-Modulators so gross gewählt ist, dass die Temperaturschwankung der äusseren Temperatur (831, 832) mindestens eines Flächen-Wärmeabgabemoduls (31, 32) bei Nennleistung der Wärmepumpe und einem Tastverhältnis von 50% einen vorgegebenen Wert erreicht.

6. Heizsystem nach einem der Ansprüche 1 - 3,
**dadurch gekennzeichnet dass**

- der Taktgenerator (543) das Signal eines Temperatursensors (832) erhält, welches einer charakteristischen Systemtemperatur (932) entspricht,
- der Taktgenerator (543) den Einschaltzustand beendet, sobald die charakteristische Systemtemperatur (932) sich um einen festgelegten Wert geändert hat und
- der Taktgenerator (543) die Ausschaltzeit (ta) so einstellt, dass das Tastverhältnis (te/ta) den angeforderten Wert annimmt.

7. Heizsystem nach einem der Ansprüche 1 - 6,
**dadurch gekennzeichnet dass** eine Wärmepumpe (111, 113) die Wärme aus der Aussenluft bezieht und ein Mehrstufen-Pumpsystem umfasst.

**Claims**

1. A heating system for buildings with a heat generation system (1) including at least one heat pump (111), a heat transportation system predominantly based on Water (2), a control system (5), and a heat distribution system (3) with at least one panel heating module (31, 32), wherein

    - the control system (5) includes at least one indoor temperature detection system (51), at least one target temperature system (52), at least one PID control block (53), and at least one pulse generator (54), wherein

        - the indoor temperature detection system (51) generates an averaged temperature value (951) reflecting the temperature in the interior of the building,
        - the PID control block (53) uses the averaged temperature value (951) and a value supplied by the target temperature system (52) to generate a deviation correction signal (953), and
        - the pulse generator (54) uses the deviation correction signal (953) to generate an on-off signal (954, 9541, 9542, 9543) for at least one heat pump (111), whose duty cycle (954T, 9543T) increases monotonically as the value of the deviation correction signal (953) increases.

2. Heating system according to claim 1, wherein

    - the output power of the heat pump (113) can be changed by a power control signal (9551) and
    - the control system (5) additionally includes a control amplifier (551), wherein

        - in a lower range (9531) of the deviation correction signal (953), the pulse generator (541, 542, 543) generates an on-off signal with a monotonically increasing duty cycle (9541T) and the control amplifier (551) generates a small power control signal (9551m) and
        - in an upper range (9532) of the deviation correction signal (953), the pulse generator (541) generates a continuous on signal (9541T=100%) and the control amplifier (551) generates a power control signal (9551) monotonically increasing with the value of the deviation correction signal (953).

3. Heating system according to claim 1 or claim 2, wherein

    - the control system (5) further

        - includes an outdoor temperature detection system (57) with at least one sensor for the detection of the outdoor temperature (856),
        - includes a heat-output-curve generator (58), which generates an outdoor temperature target power value (958) for each outdoor temperature (956) and
        - the outdoor temperature target power value (958) is added to the deviation correction signal (953) in such a way that changes in outdoor temperature (956) are compensated for by more than 70%.

4. Heating system according to one of the claims 1-3, wherein

    - the pulse generator (54, 541, 542) includes a pulse width modulator for the generation of the on-off signal (954, 9541, 9542).

5. Heating system according to claim 4, wherein

    - the period duration (te+ta) of the pulse width modulator is chosen so that the fluctuation in surface temperature (831, 832) of at least one panel heating module (31, 32) reaches a predefined value at rated output power of the heat pump and a duty cycle of 50%.

**6.** Heating system according to one of the claims 1-3, wherein

- the pulse generator (543) receives a temperature sensor's signal (832), which corresponds with a characteristic system temperature (932),
- the pulse generator (543) ends the on-status as soon as the characteristic system temperature (932) has changed by a fixed value and
- the pulse generator (543) adjusts the switch-off time (ta) such that the duty cycle (te/ta) assumes the required value.

**7.** Heating system according to one of the claims 1-6, wherein a heat pump (111, 113) draws warmth from the outdoor air and includes a multi-stage pumping system.


**Revendications**

**1.** Un système de chauffage pour les bâtiments dotés d'un système de production de chaleur (1) comprenant au moins une pompe à chaleur (111), un système de transport de la chaleur essentiellement basé sur l'eau (2), un système de commande (5) et un système de distribution de chaleur (3) avec au moins un module de chauffage par panneaux (31, 32),
**caractérisé en ce que**

- le sytème de commande (5) comprend au moins un système de détection de la température intérieure (51), au moins un système de température cible (52), au moins un bloc de commande PID (53) au moins un bloc de régulation PID (53) et au moins un générateur d'impulsions (54) dans lesquels

- le système de détection de la température intérieure (51) génère une valeur de température lissée dans le temps (951) reflétant la température à l'intérieur du bâtiment,
- le bloc de commande PID (53) utilise la valeur de température lissée dans le temps (951) et une valeur fournie par le système de température cible (52) pour générer un signal de correction d'écart (953) et
- le générateur d'impulsions (54) utilise le signal de correction d'écart (953) pour générer un signal marche-arrêt (954, 9541, 9542, 9543) pour au moins une pompe à chaleur (111), dont le rapport cyclique (954T, 9543T) augmente de façon monotone à mesure que la valeur du signal de correction d'écart (953) augmente.

**2.** Un système de chauffage selon la revendication 1,
**caractérisé en ce que**

- la puissance de sortie de la pompe à chaleur (113) est modifiable par un signal de commande de puissance (9551) et
- le sytème de commande (5) comprend en outre un amplificateur de commande (551), dans lesquels

- dans une plage inférieure (9531) du signal de correction d'écart (953), le générateur d'impulsions (541, 542, 543) génère un signal marche-arrêt avec un rapport cyclique qui augmente de façon monotone (9541T) et l'amplificateur de commande (551) génère un signal de commande de puissance petite (9551) et
- dans une plage supérieure (9532) du signal de correction d'écart (953), le générateur d'impulsions (541) génère un signal de marche continu (9541T=100%) et l'amplificateur de commande (551) génère un signal de commande de puissance (9551) augmentant de façon monotone avec la valeur du signal de correction d'écart (953).

**3.** Un système de chauffage selon la revendication 1 ou la revendication 2,
**caractérisé en ce que**

- le sytème de commande (5) en outre

- comprend un système de détection de la température extérieure (57) avec au moins un capteur pour la détection de la température extérieure (856),
- comprend un générateur d'une courbe de puissance de sortie de chauffage (58), qui génère une valeur de puissance cible de température extérieure (958) pour chaque température extérieure (956) et

- la valeur de puissance cible de température extérieure (958) est ajoutée au signal de correction d'écart (953) de manière à ce que les variations de la température extérieure (956) sont compensées à plus de 70 %.

4. Un système de chauffage selon l'une des revendications 1-3, **caractérisé en ce que**

- le générateur d'impulsions (54, 541, 542) comprend un modulateur de largeur d'impulsion pour générer le signal marche-arrêt (954, 9541, 9542).

5. Un système de chauffage selon la revendication 4, **caractérisé en ce que**

- la durée de la période (te+ta) du modulateur de largeur d'impulsion est choisie de manière à ce que la fluctuation de la température de surface (831, 832) d'au moins un module de chauffage par panneaux (31, 32) atteigne une valeur prédéfinie à la puissance nominale de la pompe à chaleur et un rapport cyclique de 50%.

6. Un système de chauffage selon l'une des revendications 1-3, **caractérisé en ce que**

- le générateur d'impulsions (543) reçoit le signal d'un capteur de température (832), qui correspond à une température caractéristique du système (932),
- le générateur d'impulsions (543) met fin à l'état de mise sous tension dès que la température caractéristique du système (932) a changé d'une valeur fixe et
- le générateur d'impulsions (543) règle le temps d'arrêt (ta) de manière à ce que le rapport cyclique (te/ta) prenne la valeur demandée.

7. Un système de chauffage selon l'une des revendications 1-6, **caractérisé en ce qu'**une pompe à chaleur (111, 113) tire la chaleur de l'air extérieur et comprend un système de pompage à plusieurs étages.

Figur 1

Figur 2

Figur 3

Figur 4

**912**

912E

a)

0

Zeit t

**921**

29°C

22°C

b)

Zeit t

**942**

24°C

23°C

c) 22°C

Zeit t

**T**

24°C

**951**

23°C

22°C

**952**

d)

Zeit t

**953**

100%

e)

0%

Zeit t

**954T**

100%

f)

0%

Zeit t

Figur 5

**952**

a)

24°C

23°C

22°C

952(t1)

Zeit t

**953**

b)

100%

0%

953(t1)

Zeit t

**954**

c)

Ein

Aus

te2

Zeit t

**921**

d)

30°C

23°C

Zeit t

**942**

e)

24°C

23°C

22°C

t1          t2          t3          Zeit t

## Figur 6

Figur 7

Figur 8

Figur 9

Figur 10

Figur 11

Figur 12

Figur 13

**912**

912E

a)

0

Zeit t

**932**

DTCS  DTCS  DTCS

24°C

23,5°C

b)

Zeit t

**9543**

Ein

↓Aus1  ↓Aus2  ↓Aus3

c)

Aus

te5  ta5  te6  ta6  te7  ta7  Zeit t

Figur 14

**IN DER BESCHREIBUNG AUFGEFÜHRTE DOKUMENTE**

**In der Beschreibung aufgeführte Patentdokumente**

- DE 102005060458 A1
- EP 2088390 A2

**In der Beschreibung aufgeführte Nicht-Patentliteratur**

- Handbuch Wärmepumpen: Planung, Optimierung, Betrieb, Wartung. Januar 2008